# EUROPÄISCHE PATENTANMELDUNG

(11) **EP 3 108 968 A1**
(43) Veröffentlichungstag der Anmeldung: **28.12.2016**
(21) Anmeldenummer: 15173767.3
(22) Anmeldetag: 25.06.2015
(51) Int. Cl.: B05C 11/10, G01F 23/26

(54) **VORRICHTUNG ZUM ERMITTELN DES FÜLLSTANDS VON GESCHMOLZENEM KLEBSTOFF IN EINEM BEHÄLTER**

(71) Anmelder: Robatech AG, 5630 Muri (CH)
(72) Erfinder: Hanspeter, Felix, 4800 Zofingen (CH)
(74) Vertreter: Quermann, Helmut

(57) **Zusammenfassung**

Die Erfindung betrifft eine Vorrichtung zum Ermitteln des Füllstands von geschmolzenem Klebstoff (7) in einem Behälter (6), insbesondere bei einem Schmelzgerät (10) für Klebstoffe, mit einem innerhalb des Behälters (6) angeordneten (ersten) kapazitiven Niveausensor (2), der sich zum Ermitteln des Füllstands (23) des geschmolzenen Klebstoffs (7) im Behälter (6) in Kontakt mit dem geschmolzenem Klebstoff (7) befindet, wobei die variable Kapazität des ersten Niveausensors (2) in Abhängigkeit vom Füllstand (23) des geschmolzenen Klebstoffs (7) im Behälter (6) mittels einer Messeinrichtung (5) ermittelt wird.

Bei einer solchen Vorrichtung ist erfindungsgemäß vorgesehen, dass innerhalb des Behälters (6) ein weiterer (zweiter) kapazitiver Niveausensor (3) angeordnet ist, wobei die Messeinrichtung (5) entsprechend einer vertikalen Referenzerstreckung dieses Niveausensors (3) eine Referenzkapazität dieses Niveausensors (3) ermittelt und in einer Steuerung (9) die gemessene variable Kapazität in Bezug zur Referenzkapazität gesetzt wird.

Mittels einer solchen Vorrichtung kann der Füllstand des flüssigen Klebstoffs unabhängig von Schwankungen des Kapazitätswerts durch das Dielektrikum Klebstoff, exakt gemessen werden.

## Beschreibung

Die Erfindung betrifft eine Vorrichtung zum Ermitteln des Füllstands von geschmolzenem Klebstoff in einem Behälter, insbesondere bei einem Schmelzbehälter für Klebstoffe, mit einem innerhalb des Behälters angeordneten kapazitiven Niveausensor, der sich zum Ermitteln des Füllstands des geschmolzenen Klebstoffs im Behälter in Kontakt mit dem geschmolzenen Klebstoff befindet, wobei die variable Kapazität dieses Niveausensors in Abhängigkeit vom Füllstand des geschmolzenen Klebstoffs im Behälter mittels einer Messeinrichtung ermittelt wird.

### Technisches Gebiet

In verschiedensten Industrien werden Schmelzklebstoffe eingesetzt, um Teile miteinander zu verbinden. Für das Aufbereiten und Zuführen von Klebstoff auf die verschiedensten Substrate stehen einfache Handgeräte oder automatisierte Auftragssysteme zur Verfügung.

In Herstellungsprozessen von Produkten werden sehr oft automatisierte Auftragssysteme eingesetzt. Ein solches Schmelzklebstoff-Auftragssystem besteht in der Regel aus folgenden Teilen. In einen Schmelztank, auch als Vorschmelztank bezeichnet, wird der zu schmelzende Klebstoff eingelegt, oder über ein automatisches Zuführsystem, wie zum Beispiel einen Granulatförderer zugeführt. In dem Schmelztank wird der noch feste Klebstoff aufgeheizt und dadurch verflüssigt. Der flüssige Klebstoff gelangt in einen zum Schmelztank gehörenden oder anschließenden Vorratsbereich. Eine Förderpumpe fördert den flüssigen Klebstoff aus dem Vorratsbereich über einen Schlauch zu einem oder mehreren Auftragsköpfen. In den Auftragsköpfen sind schaltbare Ventile angebracht, über welche durch Steuersignale der Klebstoffauftrag ein- und abgeschaltet werden kann.

Schmelztank, Vorratsbereich und Förderpumpe werden in den meisten Fällen in einem Schmelzgerät, auch als Vorschmelzgerät bezeichnet, zusammengefasst. Dem Schmelzgerät zugeordnet ist eine Steuerung, welche die Heizung für die einzelnen Bereiche des Vorschmelzgeräts, für die Schläuche und für die Auftragsköpfe steuert oder regelt. Die Steuerung liefert auch Signale, welche die Zuführsysteme steuern, oder dem Bediener anzeigen, wenn Klebstoff nachgefüllt werden muss. Die Steuerung kann auch für das Ansteuern der Auftragsköpfe konzipiert sein. Oft werden die Auftragsköpfe jedoch durch Signale aus der Maschine für den Herstellungsprozess eines Produktes gesteuert.

### Stand der Technik

Vorschmelzgeräte, wie sie für unterschiedliche schmelzbare Medien, insbesondere Schmelzklebstoffe, eingesetzt werden, sind vorzugsweise so ausgeführt, dass das schmelzbare Medium rasch auf die erforderliche Schmelztemperatur gebracht und damit verflüssigt werden kann. Ist das schmelzbare Medium verflüssigt, soll es nur eine befristete Zeit im flüssigen Zustand im Gerät verweilen, bis es durch die Förderpumpe den Auftragsköpfen zugeführt wird.

In der DE 20 2006 017 808 U1 wird eine Vorrichtung zur Regelung der Bereitstellung eines fließfähigen Mediums offenbart, bei der ungeschmolzenes Medium in einem Aufnahmebehälter gelagert werden kann. Aus diesem Aufnahmebehälter wird das Medium von unten durch eine beheizbare Grillplatte abgeschmolzen und in einem Reservoir gespeichert. Das Füllniveau des Mediums im Reservoir wird über einen kapazitiven Niveausensor abgetastet und der Steuerung als digitales oder analoges Signal übermittelt. Bevorzugt sind kapazitive Niveausensoren, die ein zum Füllstand proportionales Ausgangssignal liefern.

Bei kapazitiven Niveausensoren sind deren elektrisch leitfähige Flächen mittels eines Dielektrikums voneinander getrennt. Das Dielektrikum kann sowohl ein Gas, eine Flüssigkeit oder ein Feststoff sein. Ein Dielektrikum ist eine elektrisch schwach- oder nichtleitende, nichtmetallische Substanz. Ladungsträger des Dielektrikums sind im Allgemeinen nicht frei beweglich.

Vorrichtungen mit kapazitiven Niveausensoren, wie in der vorgenannten Schrift beschrieben, haben sich in der Praxis bewährt, wenn die Eigenschaften des Mediums sich nicht verändern und immer das gleiche Medium verarbeitet wird. Ändert das Medium seine Eigenschaften, insbesondere die kapazitive Wirkung als Dielektrikum, so erfasst der kapazitive Niveausensor die Füllhöhe des Mediums unterschiedlich. Es kann zu einem Leerlaufen oder Überlaufen des Reservoirs kommen, was sich als großer Mangel an der Vorrichtung gezeigt hat. Es wurden zur Reduktion dieses Mangels dann Möglichkeiten geschaffen, den Niveausensor zu eichen. Bei einem Wechsel des Mediums muss in einem Eichbetrieb der Vorrichtung so viel vom Medium abgeschmolzen werden, bis der Füllstand im Reservoir eine definierte Höhe erreicht hat. Der Wert des analogen Signals vom Niveausensor wird dann in der Steuerung oder einen Potentiometer derart angepasst, dass die Steuerung den richtigen Füllstand erfasst.

Wird ein Medium eingesetzt, welches veränderbare Eigenschaften hat und geschieht die Änderung schleichend, wird in der Regel nicht erkannt, dass ein Eichen des Niveausensors nötig wäre. Es kann somit trotzdem zu den erwähnten Störungen kommen.

In der EP 2 711 090 A2 wird ein Auftragsgerät für Schmelzklebstoff vorgestellt, welches ein Vorschmelzgerät mit optimiertem Klebstoffreservoir aufweist und mit einem kapazitiven Niveausensor ausgerüstet ist. Das Klebstoff reservoir besteht aus einem Annahmebereich, in dem Klebstoff in Granulatform aufgenommen werden kann. Unterhalb des Annahmebereichs ist ein Heizbereich, in dem der Klebstoff aufgeheizt und damit verflüssigt wird. Der flüssige Klebstoff wird im unteren Bereich des Reservoirs auf Temperatur gehalten und dann über eine Förderpumpe den Auftragsköpfen zugeführt. Die Seitenwand des Annahmebereichs ist so ausgebildet, dass sie einen optimierten kapazitiven Niveausensor zur Füllstandsmessung des Klebstoffs im Annahmebereich bildet. Der Niveausensor ist mit der Steuerung des Vorschmelzgeräts verbunden. Die Steuerung regelt die Heizung des Reservoirs und steuert die Zufuhr des Klebestoffgranulats in den Annahmebereich in Abhängigkeit des gemessenen Füllstands durch den Niveausensor. Die durch den Niveausensor messbare Kapazität ist abhängig von der Temperatur des Klebstoffs und der Umgebungstemperatur. Um diesen Einfluss zu kompensieren, wird der Messwert des Niveausensors in Relation zur Zeit der Aufheizung des Niveausensors und zum letzten Befüllzyklus des Granulatförderers erfasst und ausgewertet. Über Gerätekonstanten, die der Steuerung bekannt sind, werden Verzögerungszeiten bestimmt, nach denen die Messung des Niveausensors als relevant eingestuft wird und für die Bestimmung des tatsächlichen Füllstands verwendet werden kann. Dieses Vorgehen ist aufwendig und stellt nur eine Annäherung dar. Damit sind Schwankungen des Füllniveaus unvermeidlich.

Der kapazitive Niveausensor erfasst das Niveau des ungeschmolzenen Granulats. Die Messung ist abhängig von den Eigenschaften des Klebstoffs und von der Beschaffenheit der Granulatkörper des Klebstoffs. Diese Abhängigkeit und die erwähnte Ungenauigkeit des Systems können dazu führen, dass der Annahmebereich leerläuft oder überfüllt wird.

Aufgabe der vorliegenden Erfindung ist es, eine Vorrichtung der eingangs genannten Art so weiterzubilden, dass sie die vorbeschriebenen Nachteile des Standes der Technik beseitigt. Insbesondere soll der Füllstand des geschmolzenen, somit flüssigen Klebstoffs unabhängig von Schwankungen des Kapazitätswerts durch das Dielektrikum Klebstoff exakt gemessen werden können.

Gelöst wird die Aufgabe bei einer Vorrichtung einer eingangs genannten Art dadurch, dass innerhalb des Behälters nicht nur der eine (erste) kapazitive Niveausensor, sondern auch ein weiterer (zweiter) kapazitive Niveausensor angeordnet ist, wobei die Messeinrichtung entsprechend einer vertikalen Referenzerstreckung dieses zweiten Niveausensors eine Referenzkapazität dieses Niveausensors ermittelt und in einer Steuerung die gemessene variable Kapazität des ersten Niveausensors in Bezug zur Referenzkapazität gesetzt wird.

Mittels des zweiten Niveausensors wird somit die Vorrichtung kalibriert. Das heißt, es wird die Kapazität des Systems gemessen, wenn der erste Niveausensor vollständig mit flüssigem Klebstoff bedeckt ist. Aufgrund der gemessenen Kapazität kann dann für den ersten Messsensor in der Steuerung die Füllhöhe zugehörend zu einem von der Messeinrichtung gemessenen Kapazitätswert bestimmt werden. Die Kapazität des ersten Niveausensors ändert sich in Abhängigkeit des Überdeckungsgrads dieses Niveausensors mit flüssigem Klebstoff.

Die erfindungsgemäße Vorrichtung mit den beiden Niveausensoren ermöglicht es somit, zum einen recht genau sich verändernde Füllstandshöhen von flüssigem Klebstoff zu erfassen, ferner kann die Anordnung die Abhängigkeit der Niveaumessung von der Temperatur der Messfühlerumgebung und der dielektrischen Eigenschaften des Klebstoffs zusammen mit der Steuerung kompensieren und automatisch erfassen.

Ein Eichen der Niveausensoren respektive der Messeinrichtung zur Bestimmung eines definierten Füllstands von Klebstoff, ist bei einem Klebstoffwechsel nicht notwendig.

Der erste Niveausensor ist insbesondere so eingebaut, dass er in den flüssigen Klebstoff eintaucht und nach oben in einen Raum mit Luft, bei der es sich in aller Regel um Umgebungsluft handelt, ragt. Der Raum ist vorzugsweise gegen die weitere Umgebung abgeschirmt, sodass dieser Niveausensor nicht mit Klebstoff kontaminiert werden kann.

Vorzugsweise ist die Vorrichtung derart gestaltet, dass der zweite Niveausensor auf einem Niveau unterhalb des ersten Niveausensors angeordnet ist. Insbesondere ist der zweite Niveausensor benachbart einem Boden des Behälters angeordnet. Demzufolge wird die Kapazität des zweiten Niveausensors ermittelt, bevor, mit zunehmender Füllung des Behälters, die Kapazität des ersten Niveausensors ermittelt wird. Es ist nicht erforderlich, dass der erste Niveausensor vollständig oberhalb des zweiten Niveausensors angeordnet ist. Es ist durchaus denkbar, dass der zweite Niveausensor oben dem unteren Bereich des ersten Niveausensors überlappt. Grundsätzlich könnte der zweite Niveausensor auch oberhalb des ersten Niveausensors angeordnet sein. Auch auf diese Art und Weise wäre eine Kalibrierung möglich.

Der erste Niveausensor und/oder der zweite Niveausensor ist/sind vorzugsweise als analoger Niveausensor ausgebildet.

Die beiden Niveausensoren können durchaus eine Baueinheit bilden, wobei die beiden Niveausensoren gegeneinander isoliert sind. Der erste Niveausensor kann auch derart gestaltet sein, dass er aus mehreren, einzelnen, kleinen Zonen, die gegeneinander isoliert sind, aufgebaut ist, wobei jede Zone der Steuerung zugeordnet ist. Allerdings weist diese Gestaltung höhere Kosten in der Herstellung der Niveausensoren und der zugehörenden Messeinrichtung auf.

Der erste Niveausensor und der zweite Niveausensor sind elektrisch zueinander isoliert ausgeführt. Die Messsensoren sind mittels Kabel mit der Messeinrichtung verbunden. In der Messeinrichtung wird die Kapazität des Systems erfasst. Das System besteht insbesondere aus einem leitenden Bereich des Behälters, den Niveausensoren, dem Dielektrikum flüssiger Klebstoff und Luft, der Messeinrichtung, der Steuerung sowie der dazugehörigen Verkabelung.

Vorzugsweise ist die Steuerung derart ausgebildet, dass mittels dieser eine exakte Proportionalität zwischen einem Überdeckungsgrad des ersten Niveausensors durch geschmolzenen Klebstoff und einem Niveausignal dieses Niveausensors erzeugt wird.

Insbesondere ist vorgesehen, dass die Messeinrichtung bezüglich des leeren Behälters ab geglichen ist.

Insbesondere ist eine Abgleichung vorgesehen, bei der die Messeinrichtung bei leerem Behälter der Steuerung einen Signalwert "Null" liefert.

Weitere Merkmale der Erfindung sind in den Unteransprüchen, der nachfolgenden Beschreibung der Zeichnung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand bevorzugter Ausführungsbeispiele dargestellt, ohne hierauf beschränkt zu sein.

Es zeigt:
- Fig. 1: in einer schematischen Darstellung den grundsätzlichen Aufbau der erfindungsgemäßen Vorrichtung,
- Fig. 2: ein Anwendungsbeispiel der erfindungsgemäßen Vorrichtung bei einem Klebstoffauftragssystem, bei dem ein Vorschmelzgerät dem Schmelzen eines Klebstoffblocks dient,
- Fig. 3: ein weiteres Anwendungsbeispiel der erfindungsgemäßen Vorrichtung bei einem Klebstoffauftragssystem, bei dem ein Vorschmelzgerät dem Schmelzen von Klebstoffgranulat dient.

### Figurenbeschreibung

Eine eine Baueinheit bildende Niveausensoranordnung 1 ist zylinderförmig ausgebildet und weist einen Niveausensor 2 sowie einen Niveausensor 3 auf. Der Niveausensor 2 ist auch als erster Niveausensor und der Niveausensor 3 als zweiter Niveausensor bezeichnet. Es handelt sich hierbei jeweils um kapazitive Niveausensoren. Diese sind elektrisch zueinander isoliert ausgeführt.

Der jeweilige Niveausensor 2 bzw. 3 ist mittels eines Kabels 4 mit einer Messeinrichtung 5 verbunden. In der Messeinrichtung 5 wird die Kapazität des Systems erfasst. Das System besteht aus dem leitenden Material, der Niveausensoranordnung 1, dem Kabel 4, einem stromleitenden Bereich 34 eines Behälters 6 zur Aufnahme von Klebstoff 7, somit einem Gehäuse eines Klebstofftanks, und einem Dielektrikum, bestehend aus dem Klebstoff 7 und Luft 8 im Behälter 6. Mit dem Niveausensor 3 wird die Vorrichtung kalibriert. Das heißt, es wird die Kapazität des Systems gemessen, wenn der Niveausensor 3 vollständig mit flüssigem Klebstoff bedeckt ist. Aufgrund der gemessenen Kapazität kann für den anderen Niveausensor, Niveausensor 2, in einer Steuerung 9 die Füllhöhe 23 im Behälter 6 zugehörend zum von der Messeinrichtung 5 gemessenen Kapazitätswert bestimmt werden. Die Kapazität des ersten Niveausensors 2 ändert sich in Abhängigkeit des Überdeckungsgrads des Bereichs mit flüssigem Klebstoff. Es besteht, abhängig von der Geometrie des Behälters 6 und dem Abstand der Niveausensoranordnung 1 zum Behälter 6 bzw. zum stromleitenden Bereich 34 des Behältergehäuses annähernd ein proportionaler Zusammenhang zwischen Überdeckungsgrad und gemessener Kapazität. Die Steuerung kann diesen Zusammenhang weiter angleichen, sodass eine exakte Proportionalität zwischen Überdeckungsgrad und einem Niveausignal erzeugt werden kann. Die Niveausensoranordnung 1, somit Niveausensor 2 und Niveausensor 3 können demnach als exakte analoge Sensoren verwendet werden.

Die Niveausensoranordnung 1 wird in einem Bereich eines Schmelzgeräts eingebaut, in dem kein Granulat im Bereich der nicht mit flüssigem Klebstoff bedeckten Niveausensoranordnung 1 zu liegen kommt. Somit taucht die Niveausensoranordnung 1 in den Klebstoff ein und ist im nicht mit Klebstoff umschlossenen Bereich, von Luft umgeben.

Die Füllstandsmessung ist mit den beiden Niveausensoren 2, 3, der Messeinrichtung 5 und der Steuerung 9 unabhängig von der Temperatur des Klebstoffs, exakt. Allfällige Kapazitätsänderungen, hervorgerufen durch eine andere Temperatur des Klebstoffs, können mit dem beschriebenen Messsystem automatisch korrigiert werden. Da die Niveausensoren 2, 3 in den flüssigen Klebstoff eintauchen, ist die Temperaturveränderung im Bereich der Niveausensoren 2, 3 durch den zugeführten Klebestoff klein und beeinflusst die Füllstandsmessung während des Betriebs nur unwesentlich. Auch ohne die Temperaturkorrektur kann somit eine exakte Messung des Füllstands erreicht werden. Neben der Temperatur des Klebstoffs gibt es weitere Einflüsse, welche zu einer Kapazitätsänderung führen können. Beispielsweise kann der Klebstoff durch eine längere Temperatureinwirkung altern; bei Polyurethan startet der Klebstoff einen Vernetzungsprozess, wenn er in Kontakt mit Umgebungsfeuchte kommt. Diese und weitere Veränderungen im Klebstoff können mit der Vorrichtung erkannt und kompensiert werden, sodass die Füllstandsmessung nicht beeinflusst wird.

Nachfolgend wird anhand von zwei Anwendungsbeispielen beschrieben, wie die erfindungsgemäße Vorrichtung in einem Schmelzgerät 10, auch als Vorschmelzgerät bezeichnet, eingesetzt wird.

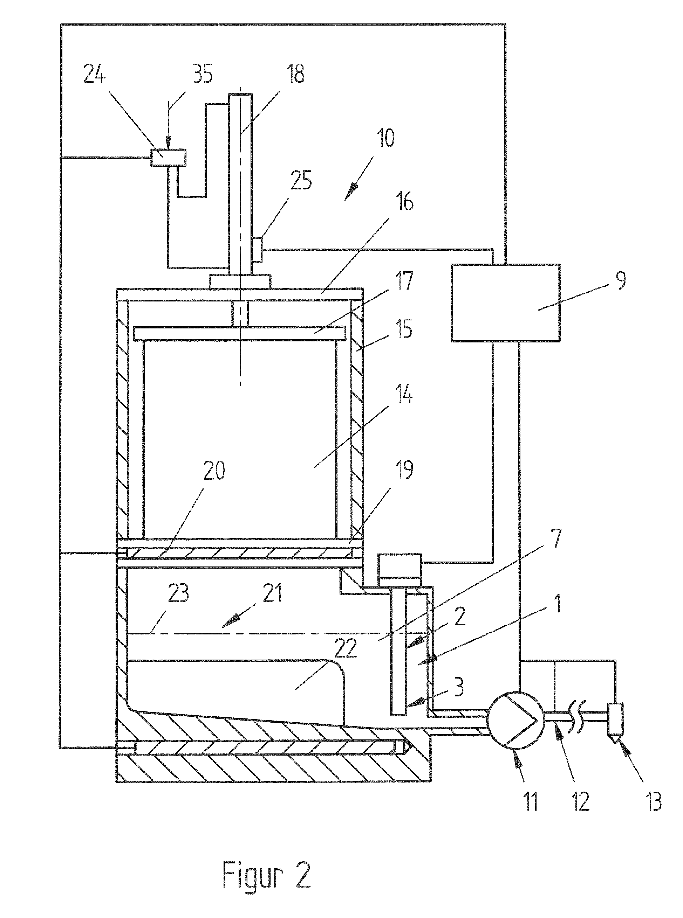

In der Fig. 2 ist ein Klebstoffauftragssystem, bestehend aus dem Schmelzgerät 10, einer Pumpe 11, einem Schlauch 12, einem Auftragskopf 13 und der Steuerung 9 gezeigt. Im Schmelzgerät 10 wird ein Klebstoffblock 14 durch einen Bediener in einen Aufnahmebehälter 15 eingelegt. Dazu kann ein Deckel 16 des Aufnahmebehälters 15 zusammen mit einer Platte 17 und einem Pneumatikzylinder 18 geschwenkt oder gekippt werden, sodass die Öffnung des Aufnahmebehälters 15 frei ist. Der eingelegte Klebstoffblock 14 wird durch eine Grillplatte 19, die mit Löchern durchsetzt ist, gehalten. Ist der Deckel 16 des Aufnahmebehälters 15 geschlossen, kann über den Pneumatikzylinder 18 und die Platte 17 Druck auf den Klebstoffblock 14 ausgeübt werden, sodass der Klebstoff gegen die Grillplatte 19 gepresst wird. Die Grillplatte 19 ist mit Heizpatronen 20, die mit der Steuerung 9 verbunden sind, beheizbar. Es gibt auch Ausführungsformen, bei denen die Grillplatte mit einer Kühleinrichtung zusätzlich kühlbar ist, um den Schmelzprozess rascher zu stoppen.

Unterhalb der Grillplatte 19 ist ein beheizbares Reservoir 21, welches auch zusätzlich mit Rippen 22 versehen ist, welche die Wärme der Heizpatronen 20 in den Klebstoff einbringen können, angebracht. Im Reservoir 21 ist die Niveausensoranordnung 1 so eingebaut, dass sie nicht von Klebstoff, der durch die Grillplatte 19 in das Reservoir 21 tropft, kontaminiert wird. Aus dem Reservoir 21 kann der flüssige Klebstoff in die Pumpe 11 einfließen und wird von dort über den Schlauch 12 zum Auftragskopf 13 bzw. Auftragsköpfen 13 gepumpt.

Die Niveausensoranordnung 1 erfasst den Füllstand 23 des flüssigen Klebstoffs 7 im Reservoir 21. Wird an den Auftragsköpfen 13 Klebstoff benötigt, so wird dieser durch die Pumpe 11 aus dem Reservoir 21 entnommen und es sinkt der Füllstand 23 des flüssigen Klebstoffs 7 im Reservoir 21. Fällt der Füllstand des flüssigen Klebstoffs 7 unter einen bestimmten Wert, wird durch die Steuerung 9 die Heizpatrone 20 in der Grillplatte 19 aktiviert und ein Ventil 24 so geschaltet, dass Pressluft, veranschaulicht durch den Pfeil 35, in den Pneumatikzylinder 18 fließen kann und damit über die Platte 17 Druck auf den Klebstoffblock 14 ausgeübt wird. Im Bereich der Grillplatte 19 wird der Klebstoff geschmolzen und tropft ins Reservoir 21, sodass der Füllstand 23 des flüssigen Klebstoffs 7 im Reservoir 21 wieder höher wird. Ist der Füllstand wieder genügend hoch, schaltet die Steuerung 9 die Heizung der Grillplatte 19 aus und das Ventil 24 wird so umgesteuert, dass keine Kraft mehr auf den Klebstoffblock 14 ausgeübt wird. Die Stellung des Kolbens im Pneumatikzylinder 18 in der unteren Endlage kann über einen Endlagenschalter 25 erfasst werden. Die Steuerung 9 informiert im Fall, dass dieser Endlagenschalter anspricht, den Bediener durch Aktivieren eines Alarms, dass Klebstoff in den Aufnahmebehälter 15 nachgefüllt werden muss.

Alternativ zur Abschaltung der Heizung zur Grillplatte 19 kann die Heizleistung der Heizpatronen 20 durch die Steuerung 9 reduziert werden. Dadurch wird die Schmelzleistung von der Grillplatte 19 reduziert und die Zufuhr von geschmolzenem Klebstoff in das Reservoir 21 wird reduziert. Stellt die Steuerung 9 durch das Messergebnis des Niveausensors 2 fest, dass der Füllstand 23 des flüssigen Klebstoffs 7 sinkt, kann die Heizleistung von den Heizpatronen 20 in die Grillplatte 19 wieder erhöht werden.

Neben dem beschriebenen Aufnahmebereich mit Pneumatikzylinder 18 und Platte 17 sind auch alle anderen Vorrichtungen möglich, die den Druck des Klebstoffblocks 14 auf die Grillplatte 19 erhöhen oder reduzieren. So kann zum Beispiel einfach nur Gewicht auf die Platte 17 gelegt oder entfernt werden. Es kann auch eine Klemmeinrichtung vorgesehen sein, die den Klebstoffblock zurückhält, wenn nicht weiter Klebstoff abgeschmolzen werden soll.

Will nun der Bediener von einem ersten Klebstofftyp auf einen zweiten Klebstofftyp wechseln, so entleert der Bediener das ganze Klebstoffauftragssystem oder zumindest das Schmelzgerät 10 vom ersten Klebstofftyp. Er füllt den zweiten Klebstofftyp in der beschriebenen Art und Weise in den Aufnahmebehälter 15 und startet das System. Die Niveausensoranordnung 1 stellt fest, dass kein Klebstoff im Reservoir 21 vorhanden ist und die Steuerung startet den Füllprozess des Reservoirs 21. Mit steigendem Füllstand des flüssigen Klebstoffs 7 wird die Niveausensoranordnung 1 langsam bedeckt. Als Erstes wird der Niveausensor 3 mit Klebstoff bedeckt. Etwas später wird auch der untere Teil des Niveausensors 2 mit Klebstoff bedeckt. Sobald dies geschehen ist, erkennt die Steuerung 9 über die Messeinrichtung 5, dass der Niveausensor 3 vollständig bedeckt ist. Der gemessene Kapazitätswert des Niveausensors 3 wird nun zur Bestimmung der Zuordnung von Füllstand zu Kapazitätswert für den Niveausensor 2 benutzt und damit das Niveaumesssystem automatisch geeicht. Mit dem vorgestellten Klebstoffauftragssystem ist es auch ohne Weiteres möglich, den Füllstand des flüssigen Klebstoffs 7 im Reservoir 21 dem Verbrauch an Klebstoff anzupassen. Über die Pumpe 11 oder mit einem Durchflussmessgerät kann der Klebstoffverbrauch bestimmt werden. Basierend auf diesem Verbrauch kann nun die Steuerung 9 die Heizleistung der Heizpatronen 20 zur Grillplatte 19 steuern und damit die Nachförderung von geschmolzenem Klebstoff 7 auf den Verbrauch abstimmen. Mit dem Niveausensor 2 wird der Füllstand des flüssigen Klebstoffs 7 im Reservoir 21 laufend gemessen und die Steuerung 9 verwertet auch dieses Ergebnis zur Ansteuerung der Heizleistung der Heizpatronen 20 in der Grillplatte 19.

Im Weiteren kann der Füllstand des flüssigen Klebstoffs 7 im Reservoir 21, abhängig vom Verbrauch an Klebstoff höher oder tiefer gewählt werden. Dadurch wird erreicht, dass die Verweilzeit des Klebstoffs im Reservoir 21 minimiert ist, was sich positiv auf die Qualität des Klebstoffs auswirkt. Der Klebstoff wird nicht unnötig mit Wärme belastet. Dies ist vor allem bei kostengünstigen Klebstoffen wichtig, weil diese bei längerer Belastung mit Wärme dazu neigen, die Farbe zu verändern oder dass Bestandteile im Klebstoff langsam verkoken.

Der Bediener kann der Steuerung 9 vorgeben, ob sie das Niveau des Füllstands 23 vom flüssigen Klebstoff 7 automatisch dem Verbrauch anpasst, oder ob sie dies nur anzeigen und damit vorschlagen kann. Der Bediener entscheidet dann, ob er den Vorschlag der Steuerung 9 annehmen will oder nicht. Ein tieferes Füllstandsniveau kann dann nicht gewünscht sein, wenn bald auf eine andere Produktion umgeschaltet wird, bei der ein viel größerer Klebstoffbedarf vorhanden ist.

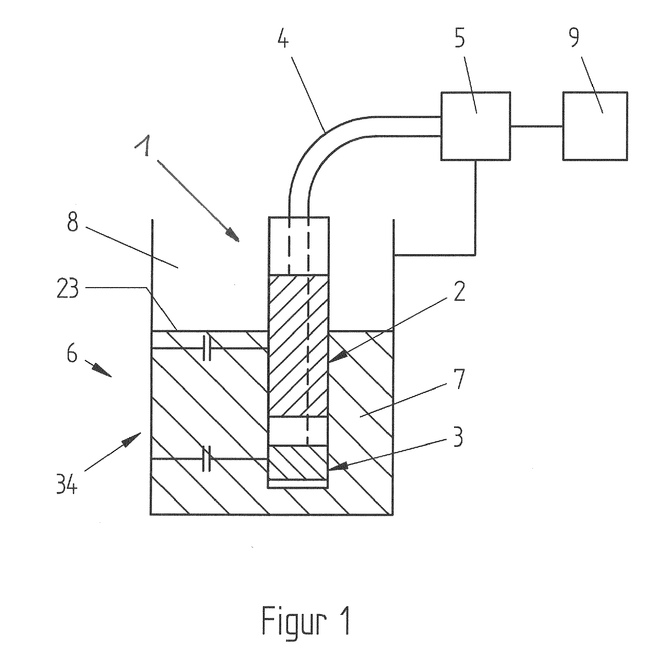

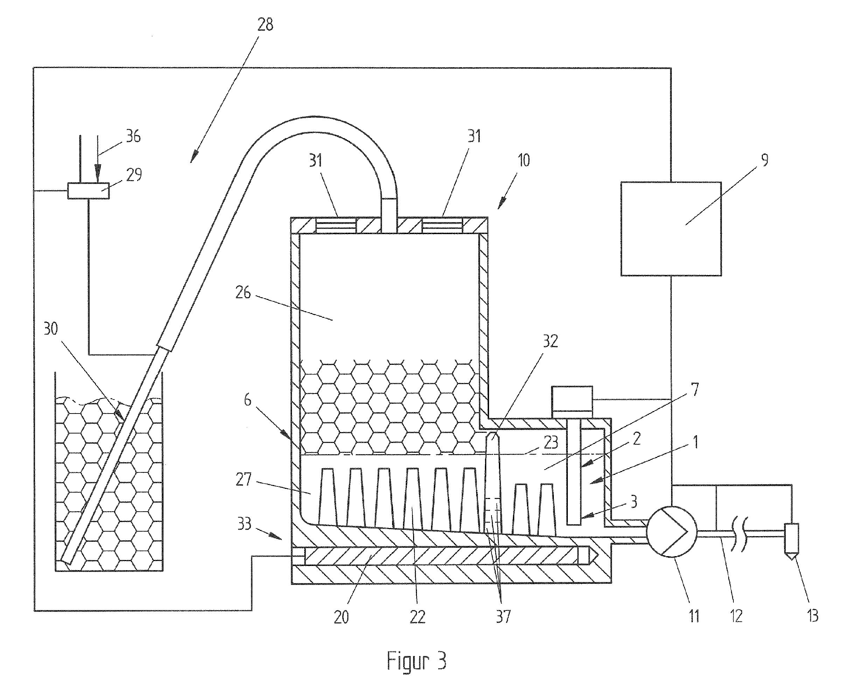

In der Fig. 3 wird ein anderes Klebstoffauftragssystem gezeigt. Das Schmelzgerät 10 weist einen beheizbaren Behälter 6 mit einem Annahmebereich 26 und einem Heizbereich 27 auf. Fester Klebstoff kann in Form von Granulat oder Pellets durch ein Zuführsystem 28 in den Annahmebereich 26 des Behälters 6 eingefördert werden. Dazu wird über die Steuerung 9 ein Ventil 29 so geschaltet, dass Pressluft, veranschaulicht durch den Pfeil 36, in einen Venturi-Förderer 30 gelangen kann. Der Venturi-Förderer 30 saugt die kleinen Klebstoffkörper an und fördert sie mit dem Luftstrom in den Annahmebereich 26 des Behälters 6. Die Luft entweicht durch einen Filter 31 aus dem Annahmebereich 26 des Behälters 6; die Klebstoffkörper verbleiben im Annahmebereich 26. Im Heizbereich 27 des Behälters 6 wird der Klebestoff durch die Wärme, die durch Heizpatronen 20 in den Boden 33 des Behälters 6 eingeleitet wird, geschmolzen und auf eine Verarbeitungstemperatur gebracht. Die Wärmeleitung und Einbringung der Wärme in den Klebstoff wird durch die Rippen 22 oder kegelartige Zapfen verstärkt. Im Heizbereich des Behälters 6 ist die beschriebene Niveausensoranordnung 1 angebracht. Diese ist durch eine Trennwand 32 so vom festen Klebstoff getrennt, dass sie nicht durch unverflüssigte Klebstoffkörper kontaminiert werden kann. Im Heizbereich des Behälters 6 wird der Klebstoff verflüssigt und gelangt durch Durchbrüche 37 oder Öffnungen in der Trrennwand 32 in den Bereich der Niveausensoranordnung 1. Der flüssige Klebstoff 7 bildet dabei einen Füllstand 23. Der Füllstand 23 des flüssigen Klebstoffs 7 wird durch die Niveausensoranordnung 1 und die Steuerung 9 erfasst. Die Steuerung 9 steuert den Vorschmelzer in Abhängigkeit des Füllstands vom flüssigen Klebstoff 7. Der flüssige Klebstoff 7 fließt in die Pumpe 11 und gelangt über den Schlauch 12 zu dem Auftragskopf 13. Wird ein erstes Mal Klebstoff in den Vorschmelzer eingefüllt, oder wird von einem ersten Klebstofftyp auf einen zweiten Klebstofftyp gewechselt, so eicht sich die Niveausensoranordnung 1 zusammen mit der Steuerung 9 selbsttätig, wie dies bereits oben grundsätzlich bezüglich der erfindungsgemäßen Vorrichtung anhand von Fig. 1 und zum Klebstoffauftragsgerät gemäß Fig. 2 beschrieben ist.

Das automatische Beschicken des Behälters 6 mit festem Klebstoff erfolgt wie nachfolgend beschrieben:

Fällt der Füllstand 23 des flüssigen Klebstoff 7 unter einen bestimmten Wert, aktiviert die Steuerung 9 den Venturi-Förderer 30 für eine bestimmte Zeit. Dadurch wird eine definierte Menge von Klebstoff in den Annahmebereich 26 des Behälters 6 gefördert. Durch das Eigengewicht des eingeförderten Klebstoffs steigt der Füllstand des flüssigen Klebstoffs im Behälter 6 leicht. Vom festen Klebstoff im Annahmebereich des Behälters 6 wird durch die Wärme, die über die Heizpatronen 20 eingeleitet wird, Klebstoff verflüssigt. Mit fallender Menge an festen Klebstoffkörpern fällt der Druck des eingeförderten Klebstoffs auf den flüssigen Klebstoff und der Füllstand 23 des flüssigen Klebstoffs fällt. Unterschreitet der Füllstand 23 einen bestimmten Wert, wird für ein weiteres Mal durch die Steuerung 9 der Venturi-Förderer 30 aktiviert und fester Klebstoff zugeführt. Durch das Erfassen der Zeit, die zwischen den einzelnen Befüllungszyklen auftritt, kann die Steuerung die Förderzeit des Venturi-Förderers 30 verändern. Ist die Zeit zwischen den Befüllzyklen klein, so verlängert die Steuerung 9 die Förderzeit des Venturi-Förderers 30. Ist die Zeit groß, so verkürzt die Steuerung 9 die Förderzeit des Venturi-Förderers 30.

Wie beim Klebstoffauftragsgerät nach Fig. 2, kann auch bei diesem Klebstoffauftragsgerät der Verbrauch an Klebstoff erfasst und damit der Füllstand 23 des flüssigen Klebstoffs 7 so optimiert werden, dass die Verweilzeit des flüssigen Klebstoffs im Behälter optimiert ist.

Beim Bau einer neuen erfindungsgemäßen Vorrichtung bzw. eines neuen Vorschmelzgerätes mit der kapazitiven Niveausensoranordnung 1 wird nach der Montage aller Teile, die auf die Kapazität einen Einfluss haben, das System auf "Null" abgeglichen. Das heißt: Die Messeinrichtung 5 wird so eingestellt, dass sie der Steuerung 9 einen Signalwert "Null" liefert. Dieser Abgleich erfolgt ohne Klebstoff. Ein solcher Abgleich muss auch dann gemacht werden, wenn die Niveausensoranordnung 1 bzw. einer oder beide Niveausensoren 2, 3 ausgetauscht werden. Nach dem Abgleich kann das Vorschmelzgerät, wie oben beschrieben, eingesetzt werden.

Unter Verwendung der vorbeschriebenen Niveausensoranordnung 1 und der Messeinrichtung 5 mit der Steuerung 9 ist es ohne Weiteres möglich festzustellen, wenn das Reservoir 21 des Vorschmelzers leer wird. Sinkt der gemessene Kapazitätswert des unteren Niveausensors 3 unter einen Minimalwert, so kann davon ausgegangen werden, dass sich kein Klebstoff in diesem Bereich befindet. Die Steuerung 9 kann ein Steuersignal anzeigen und/oder absetzen und durch Abschalten der Heizungen und der Pumpe einen fehlerhaften Klebstoffauftrag verhindern.

Es ist möglich, mit der Niveausensoranordnung 1 und der Steuerung 9 die unterschiedlichen Dielektrizitätswerte von Klebstoffen zu erfassen. Stellt man dazu der Steuerung 9 eine Datenbank zur Verfügung, welche den Zusammenhang zwischen Dielektrizitätswert und Klebstofftyp darstellt, kann das Schmelzgerät 10 anzeigen, welcher Klebstoff eingesetzt wird. Statt jeden einzelnen Klebstofftyp zu erfassen und anzuzeigen, wäre es auch denkbar, Klebstoffgruppen zu bilden und diese durch das Schmelzgerät 10 anzeigen zu lassen. Eine solche Anzeige ist für den Bediener hilfreich, um grobe Klebstoffverwechslungen auszuschließen.

Wird immer der gleiche Klebstoff verarbeitet und ändert sich der Dielektrizitätswert des Klebstoffs während des Betriebs des Schmelzgeräts 10 massiv, so deutet dies auf eine Veränderung des Klebstoffs hin. Die Steuerung 9 kann diese Veränderung durch eine Warnung anzeigen und damit den Bediener auf die Veränderung aufmerksam machen.

Die Niveausensoranordnung 1 wird in mehreren Längen ausgeführt, dabei variiert die Länge des oberen Niveausensors 2. Mit den unterschiedlichen Längen stehen Niveausensoren 2, 3 zur Verfügung, die optimal auf die Bedürfnisse eines Schmelzgeräts 10 abstimmbar sind. Dadurch kann bei jedem Schmelzgerät ein exaktes Messresultat erreicht werden.

Die Niveausensoranordnung 1 ist derart in das Reservoir 21 eingebaut, das die Niveausensoren 2 und 3 durch geschmolzenen Klebstoff 7 oder Luft 8 in jedem Fall von einer Gehäusewand eines Behälters 6 isoliert sind. Vorzugsweise ist diese Isolierung durch einen ordentlichen Abstand zwischen den beiden Teilen realisiert. Je größer dieser Abstand gewählt ist, je größer wird der messbare Kapazitätswert. Dies hat den Vorteil, dass allfällig an den Niveausensoren 2, 3 auftretende Verschmutzung, durch hängengebliebene und/oder verkokte Klebstoffreste, die Messung kaum beeinflusst.

Der Niveausensor 2 könnte alternativ auch aus mehreren, einzelnen, kleinen Zonen, die gegeneinander isoliert sind, aufgebaut sein. Dabei bildet jene Zone ein System, welches je aus dem leitenden Material des Messsensors, dem Kabel, dem Gehäuse des Behälters und dem Dielektrikum bestehend aus Klebstoff und Luft besteht. Die Messeinrichtung misst dabei in jeder dieser Zonen die Kapazität des Systems. Die Steuerung kann dabei unter Berücksichtigung der Anordnung der einzelnen Zonen im Sensor, aufgrund der Messwerte aus der Messeinrichtung, den Füllstand des flüssigen Klebstoffs bestimmen. Diese Sensorgestaltung bedingt aber relativ hohe Kosten betreffend die Herstellung des Sensors und der zugehörigen Messeinrichtung.

Die Erfindung einschließlich deren Weiterbildungen schlägt eine besonders gestaltete Niveausensoranordnung vor, die zum einen recht genau sich verändernde Füllstandshöhen von flüssigem Klebstoff erfassen kann und die die Abhängigkeit der Niveaumessung von der Temperatur der Messfühlerumgebung und der dielektrischen Eigenschaften des Klebstoffs zusammen mit der Steuerung kompensieren und automatisch erfassen kann.
Ein Eichen der Sensoranordnung, respektive der Messeinrichtung zur Bestimmung eines definierten Füllstands von Klebstoff, ist bei einem Klebstoffwechsel nicht notwendig.
Die Niveausensoranordnung besteht aus mindestens zwei Bereichen mit unabhängigen Messkreisen. Die Niveausensoranordnung kann durch separate Niveausensoren gebildet sein.

In einem Schmelzgerät bzw. Vorschmelzer eines Klebstoffauftragsgeräts wird die Niveausensoranordnung, die Messeinrichtung und die Steuerung dazu eingesetzt, die Zufuhr des Klebstoffs in das Schmelzgerät optimiert zu steuern. Die Niveausensoranordnung ist so eingebaut, dass sie in den flüssigen Klebstoff eintaucht und nach oben in einen Raum mit Luft ragt. Der Raum ist so gegen die weitere Umgebung abgeschirmt, dass die Niveausensoranordnung nicht mit Klebstoff kontaminiert werden kann.

Die Zufuhr von festem Klebstoff als Granulat, Pellets oder Körner mit einem automatischen Zuführsystem in einen Annahmebereich des Behälters wird durch die Steuerung, die Messwerte aus dem Niveausensor, der den Füllstand des flüssigen Klebstoffs erfasst, gesteuert.
Der Füllstand des flüssigen Klebstoffs in dem Schmelzgerät kann durch die Steuerung dem Klebstoffverbrauch angepasst werden, oder die Steuerung kann dem Bediener vorschlagen, einen anderen Füllstand als Geräteeinstellung zu benutzen. Die Niveausensoranordnung ist so aufgebaut, dass Längenausdehnungen, die durch das Aufheizen des Klebstoffs von Umgebungstemperatur auf eine Verarbeitungstemperatur zu verzeichnen sind, minimale Kräfte auf die Niveausensoranordnung und die Umgebung ausüben.
Die Niveausensoranordnung ist derart in das Reservoir eingebaut, dass die beiden Niveausensoren durch Klebstoff oder Luft in jedem Falle von einer Gehäusewand des Behälters isoliert sind. Vorzugsweise ist diese Isolierung durch einen ordentlichen Abstand der beiden Teile realisiert.

### Bezugszeichenliste

- 1: Niveausensoranordnung
- 2: Niveausensor
- 3: Niveausensor
- 4: Kabel
- 5: Messeinrichtung
- 6: Behälter
- 7: Klebstoff
- 8: Luft
- 9: Steuerung
- 10: Schmelzgerät
- 11: Pumpe
- 12: Schlauch
- 13: Auftragskopf
- 14: Klebstoffblock
- 15: Aufnahmebehälter
- 16: Deckel
- 17: Platte
- 18: Pneumatikzylinder
- 19: Grillplatte
- 20: Heizpatrone
- 21: Reservoir
- 22: Rippe
- 23: Füllstand
- 24: Ventil
- 25: Endlagenschalter
- 26: Annahmebereich
- 27: Heizbereich
- 28: Zuführsystem
- 29: Ventil
- 30: Venturi-Förderer
- 31: Filter
- 32: Trennwand
- 33: Boden
- 34: Bereich
- 35: Pfeil
- 36: Pfeil
- 37: Durchbruch

## Patentansprüche

1. Vorrichtung zum Ermitteln des Füllstands von geschmolzenem Klebstoff (7) in einem Behälter (6), insbesondere bei einem Schmelzgerät (10) für Klebstoffe, mit einem innerhalb des Behälters (6) angeordneten (ersten) kapazitiven Niveausensor (2), der sich zum Ermitteln des Füllstands (23) des geschmolzenen Klebstoffs (7) im Behälter (6) in Kontakt mit dem geschmolzenem Klebstoff (7) befindet, wobei die variable Kapazität des ersten Niveausensors (2) in Abhängigkeit vom Füllstand (23) des geschmolzenen Klebstoffs (7) im Behälter (6) mittels einer Messeinrichtung (5) ermittelt wird, **dadurch gekennzeichnet, dass** innerhalb des Behälters (6) ein weiterer (zweiter) kapazitiver Niveausensor (3) angeordnet ist, wobei die Messeinrichtung (5) entsprechend einer vertikalen Referenzerstreckung dieses Niveausensors (3) eine Referenzkapazität dieses Niveausensors (3) ermittelt und in einer Steuerung (9) die gemessene variable Kapazität in Bezug zur Referenzkapazität gesetzt wird.

2. Vorrichtung nach Anspruch 1, **dadurch gekennzeichnet, dass** der zweite Niveausensor (3) auf einem Niveau unterhalb des ersten Niveausensors (2) angeordnet ist.

3. Vorrichtung nach Anspruch 1 oder 2, **dadurch gekennzeichnet, dass** der zweite Niveausensor (3) benachbart einem Boden (33) des Behälters (6) angeordnet ist.

4. Vorrichtung nach einem der Ansprüche 1 bis 3, **dadurch gekennzeichnet, dass** der erste Niveausensor (2) und/oder der zweite Niveausensor (3) als analoger Niveausensor ausgebildet ist/sind.

5. Vorrichtung nach einem der Ansprüche 1 bis 4, **dadurch gekennzeichnet, dass** der erste Niveausensor (2) und der zweite Niveausensor (3) eine Baueinheit (1) bilden, wobei die beiden Niveausensoren (2, 3) gegeneinander isoliert sind.

6. Vorrichtung nach einem der Ansprüche 1 bis 5 **dadurch gekennzeichnet, dass** der Behälter (6) zumindest teilweise leitend ist und ein elektrisches System den leitenden Bereich des Behälters (6), die Niveausensoren (2, 3), das Dielektrikum flüssiger Klebstoff (7) und Luft (8) sowie die Messeinrichtung (5) und die Steuerung (9) aufweist.

7. Vorrichtung nach einem der Ansprüche 1 bis 6, **dadurch gekennzeichnet, dass** die Steuerung (9) derart ausgebildet ist, dass mittels dieser eine exakte Proportionalität zwischen einem Überdeckungsgrad des ersten Niveausensors (2) durch geschmolzenen Klebstoff (7) und einem Niveausignal dieses Niveausensors (2) erzeugt wird.

8. Vorrichtung nach einem der Ansprüche 1 bis 7, **dadurch gekennzeichnet, dass** die Niveausensoren (2, 3) außerhalb von Bereichen des Behälters (6) angeordnet sind, die der Aufnahme von noch nicht geschmolzenem Klebstoff dienen.

9. Vorrichtung nach einem der Ansprüche 1 bis 8, **dadurch gekennzeichnet, dass** die Niveausensoren (2, 3) in einem Bereich des Behälters (6) angeordnet sind, der ein Reservoir (21) für geschmolzenen Klebstoff (7) unterhalb einer aufheizbaren Grillplatte (19) zum Schmelzen von festem Klebstoff (14) bildet.

10. Vorrichtung nach einem der Ansprüche 1 bis 8, **dadurch gekennzeichnet, dass** die Niveausensoren (2, 3) in einem Bereich des Behälters (6) angeordnet sind, der neben einem weiteren Bereich des Behälters (6) angeordnet ist, in dem die Aufschmelzung des Klebstoffs, insbesondere bei Zuführung von Klebstoff in Granulatform, erfolgt.

11. Vorrichtung nach einem der Ansprüche 1 bis 10, **dadurch gekennzeichnet, dass** die Steuerung (9) bei Unterschreiten eines definierten, vom ersten Niveausensor (2) gemessenen Füllstands (23) im Behälter (6) eine Heizung (20) zum Aufschmelzen von Klebstoff einschaltet oder die Heizleistung erhöht.

12. Vorrichtung nach einem der Ansprüche 1 bis 11, **dadurch gekennzeichnet, dass** die Steuerung (9), beim Erreichen eines definierten vom ersten Niveausensor (2) gemessenen Füllstands (23) im Behälter (6), die Heizung (20) ausschaltet oder die Heizleistung reduziert.

13. Vorrichtung nach einem der Ansprüche 1 bis 12, **dadurch gekennzeichnet, dass** die Messeinrichtung (5) bezüglich des leeren Behälters (6) abgeglichen ist, insbesondere derart, dass die Messeinrichtung (5) bei leerem Behälter (6) der Steuerung (9) einen Signalwert "Null" liefert.

14. Vorrichtung nach einem der Ansprüche 1 bis 13, **dadurch gekennzeichnet, dass** mittels der Niveausensoren (2, 3) und der Steuerung (9) die unterschiedlichen Dielektrizitätswerte von Klebstoffen erfasst werden, wobei der Steuerung (9) eine Datenbank zugeordnet ist, mittels der ein Zusammenhang zwischen dem Dielektrizitätswert und dem Klebstofftyp darstellbar ist.

15. Vorrichtung nach einem der Ansprüche 1 bis 14, **dadurch gekennzeichnet, dass** der erste Niveausensor (2) aus mehreren, einzelnen, kleinen Zonen, die gegeneinander isoliert sind, aufgebaut ist, wobei jede Zone ein System bildet, das je aus dem leitenden Material des Messsensors, einem Kabel, dem Gehäuse des Behälters und dem Dielektrikum aus Klebstoff und Umgebungsluft besteht.
